# EUROPÄISCHE PATENTSCHRIFT

(11) **EP 0 538 585 B1**
(45) Veröffentlichungstag und Bekanntmachung des Hinweises auf die Patenterteilung: **02.01.1997**
(21) Anmeldenummer: 92114214.7
(22) Anmeldetag: 20.08.1992
(51) Int. Cl.: G11B 23/023

(54) **Behälter für Magnetbandkassetten**
Magnetic tape cassette container
Boîtier pour cassette à bande magnétique

(30) Priorität: 22.10.1991 DE 4134812
(43) Veröffentlichungstag der Anmeldung: 28.04.1993
(73) Patentinhaber: fischerwerke Artur Fischer GmbH & Co. KG, D-72178 Waldachtal (DE)
(72) Erfinder: Stephan, Christoph, W-7032 Sindelfingen (DE)

(56) Entgegenhaltungen:
- EP-A- 0 171 224
- EP-A- 0 383 007
- EP-A- 0 490 049
- WO-A-87/06210
- WO-A-92/22899
- DE-A- 2 542 622
- FR-A- 2 274 107
- GB-A- 1 170 729
- US-A- 3 677 396

## Beschreibung

Die Erfindung betrifft einen Behälter mit mehreren durch Bodenplatten voneinander getrennten Aufnahmeräumen für den Längseinschub von Magnetbandkassetten .

In der DE-A-40 39 954, die der am 17.06.92 veröffentlichten EP-A-0 490 049 (stand der Technik nach Artikel 54(3) EPÜ) entspricht, wird für einen Längseinschub der Magnetbandkassette vorgeschlagen, daß die Arretiereinrichtungen durch jeweils zwei nebeneinander angeordnete und unabhängig voneinander schwenkbare Kipphebel gebildet sind. Dabei ist jedem Kipphebel zum gemeinsamen Ausrasten eine Nase an der Bodenplatte zugeordnet, während für das Einrasten für die beiden paarweise angeordneten Kipphebel einer Arretiereinrichtung nur jeweils ein Steg zur Verfügung steht. Dieser Steg ist an einem Schiebeelement angeordnet, das in der Bodenplatte gelagert und mit der Magnetbandkassette quer zur Einschubrichtung verschiebbar ist. Diese spezielle Ausbildung für einen Längseinschub einer Magnetbandkassette ermöglicht eine Bandarretierung unabhängig davon, in welcher Lage die Kassette auf den Schieber aufgelegt wird. Die Spulennaben der Kassetten sind nämlich in Längsrichtung der Kassette aus der Mitte versetzt angeordnet, so daß jeweils nur der in gleicher Richtung versetzt sitzende Kipphebel in Eingriff kommt. Da nur jeweils ein Kipphebel durch den am Schiebeelement angeordneten Steg zum Einrasten aufgestellt wird, bleibt der andere Kipphebel in der ausgerasteten Position. Der jeweils passende Kipphebel wird dadurch in Eingriff gebracht, in dem das Schiebeelement mit den an ihm angeordneten Stegen mit der Magnetbandkassette verschoben wird. Die Verschiebung des Schiebeelementes erfolgt über den an den Kassetten angeordneten Wulst, der auf einen schräg stehenden und die Oberseite der Bodenplatte überragenden Steuerkeil des Schiebeelementes auftrifft.

Neben den Kassetten mit offenen Spulennaben gibt es zwischenzeitlich auch Magnetbandkassetten, bei denen die Spulennaben durch eine Lasche geschlossen sind. Die geschlossene Lasche übernimmt gleichzeitig auch die Bandarretierung, so daß solche Kassetten im Aufbewahrungsbehälter keine Bandarretierung mehr benötigen. Durch den Verschluß der Spulennabe ist es nicht mehr möglich, für die Aufbewahrung solcher Kassetten Behälter zu verwenden, die feste oder zwangsweise sich aufstellende Arretiereinrichtungen für die Spulennabe aufweisen.

Der Erfindung liegt die Aufgabe zugrunde, einen Behälter zu schaften, der sowohl für Magnetbandkassetten mit offenen als auch mit geschlossenen Spulennaben verwendbar ist.

Die Lösung dieser Aufgabe wird durch die im Anspruch 1 angegebenen Merkmale erreicht. Mit Zentrierelementen wird beim Ausfahren des Schiebers das Schiebeelement in eine Mittelposition verschoben, in der beim Einschieben des Schiebers keine Betätigung der Kipphebel erfolgt. In der Mittelposition werden nämlich die der jeweiligen Arretiereinrichtung zugeordneten Stege in den zwischen zwei benachbart angeordneten Kipphebeln gebildeten Freiraum eingeschoben. Da die Kipphebel nicht aufgerichtet werden, kann auf dem Schieber eine Magnetbandkassette eingelegt sein, die geschlossene Spulennaben aufweist. Derartige Kassetten weisen außerdem ein Kassettengehäuse mit planen Außenflächen auf, so daß die beim Ausfahren des Schiebers sich einstellende Mittelposition des Schiebeelementes beim Einlegen einer solchen Kassette nicht verändert wird.

Die Verwendung des Behälters für die Aufbewahrung der herkömmlichen Magnetbandkassette mit offenen Spulennaben wird durch die Verschiebemöglichkeit des Schiebeelementes mit dem an diesen Kassetten angeordneten Wulst erreicht. Je nach Lage des Wulstes wird das Schiebeelement über die an ihm angeordneten Steuerkeile in die linke oder rechte Position gebracht, in der dann beim Einschieben des Schiebers mit der Kassette der linke oder rechte Kipphebel der Arretiereinrichtungen zum Eingriff in die offene Spulennabe der Magnetbandkassette aufgerichtet wird. Die erfindungsgemäße Lösung ermöglicht somit den Längseinschub von Magnetbandkassetten in jeder Lage und unabhängig davon, ob diese offene oder geschlossene Spulennaben aufweisen.

Die Zentrierung der Mittelposition kann entweder durch Zentrierelemente erfolgen, die durch zwei im Abstand der Steuerkeile am Schieber angeordnete Schrägflächen oder durch Federelemente gebildet sind, die an der Bodenplatte im Bereich der Aussparung für die Steuerkeile angeordnet sind und zentrierend an den beiden Steuerkeilen angreifen.

Die Erfindung wird nachfolgend anhand der Zeichnungen näher erläutert.

Es zeigen:
- Figur 1: den Behälter mit mehreren Aufnahmeräumen für Magnetbandkassetten,
- Figur 2: eine perspektivische Ansicht der Bodenplatte bei eingefahrenem Schieber und eingelegter Magnetbandkassette mit offenen Spulennaben,
- Figur 3: die Bodenplatte bei ausgefahrenem Schieber und in Mittelposition zentriertem Schiebeelement und,
- Figur 4: die Bodenplatte nach Figur 3 bei eingefahrenem Schieber und eingelegter Magnetbandkassette mit verschlossenen Spulennaben.

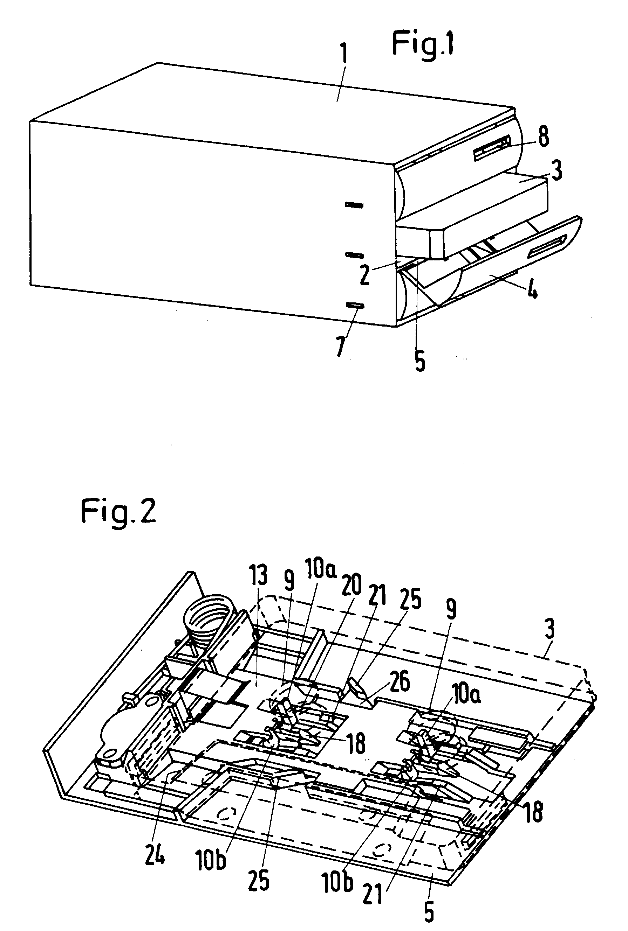

Der in Figur 1 dargestellte Behälter 1 weist drei Aufnahmeräume 2 für Magnetbandkassetten 3 auf, wobei die Verschlußklappe 4 des mittleren Aufnahmeraumes zum Entnehmen der Magnetbandkassette geöffnet ist. Die Aufnahmeräume 2 werden durch Bodenplatten 5 gebildet, die in Schienen der Seitenwände des Behälters 1 eingeschoben und beispielsweise mit Rastnasen in Durchbrechungen 7 der Seitenwände arretiert sein können. Um ohne Öffnen der Verschlußklappe 4 feststellen zu können, ob im Aufnahmeraum 2 eine Kassette eingelegt ist, sind in der Verschlußklappe Fenster 8 angeordnet.

Die in Figur 2 dargestellte Bodenplatte 5 ist für einen Behälter vorgesehen, der keine oder eine direkt am Gehäuse angeordnete Verschlußklappe 4 aufweist. Ferner ist diese Bodenplatte für einen Längseinschub der Kassette 3 in beiden Lagen möglich. Dies wird dadurch erreicht, daß die Arretiereinrichtungen durch jeweils zwei nebeneinander angeordnete und unabhängig voneinander schwenkbare Kipphebel 10a, 10b gebildet sind, an denen jeweils rechtwinklig abstehend Zapfen 20 angeordnet sind. Beide Kipphebel sind jeweils um das gleiche Maß aus der Mitte versetzt, wie die Spulennaben 9 einer Magnetbandkassette 3. Beim Ausfahren des Schiebers 13 werden die Kipphebel durch die jedem Kipphebel zugeordneten Nasen 21 ausgerastet.

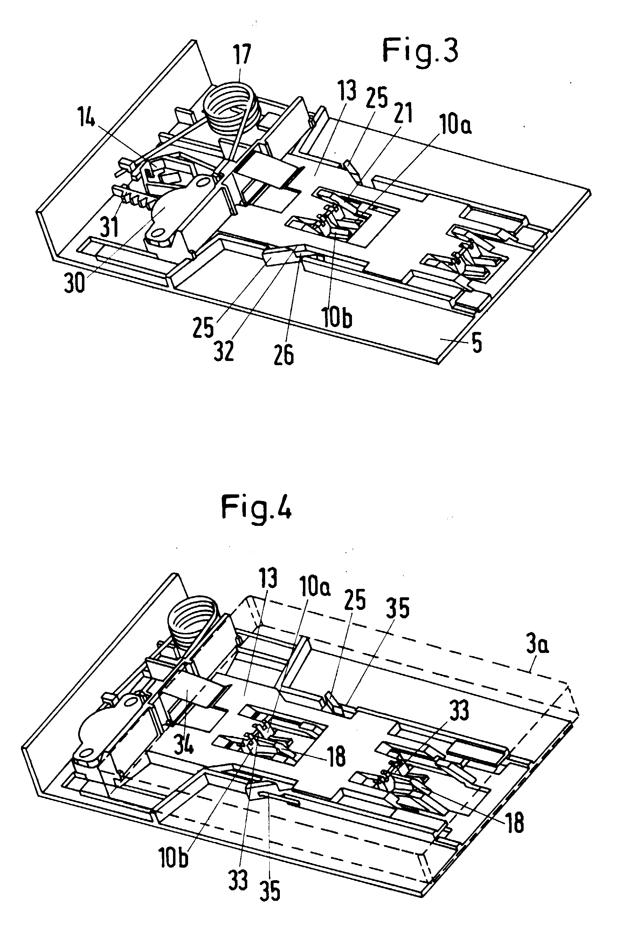

In Figur 3 ist der Schieber 13 von dem Federelement 17 in die Entnahmeposition geschoben, bei der alle Kipphebel durch Unterlaufen der Zapfen 20 unter die Nasen 21 ausgerastet sind. Um ein gedämpftes Ausfahren des Schiebers zu erreichen, ist am Schieber 13 ein Dämpfungselement 30 angeordnet, das in eine an der Bodenplatte 5 angeordnete Zahnstange 31 eingreift. Am hinteren Ende der Bodenplatte 5 ist eine nutförmige Kurvenbahn 14 eingearbeitet, die in Verbindung mit der am Schieber 13 angeordneten und mit einem Vorsprung in die Kurvenbahn 14 eingreifenden Zunge einen durch Druck auf den Schieber sowohl entriegel- als auch verriegelbaren Schließmechanismus bildet. Beim Ausfahren des Schiebers 13 werden durch am Schieber angeordneten, als Schrägflächen 32 ausgebildeten Zentrierelemente die Steuerkeile 25 des Schiebeelementes 26 in eine Mittelposition zentriert, die gleichzeitig Ausgangsbasis ist für das Einschieben einer Magnetbandkassette. Wird nunmehr gemäß Figur 2 eine Magnetbandkassette 3 mit offenen Spulennaben 9 in den Aufnahmeraum 2 eingeschoben, wird je nach Lage der Kassette das Schiebeelement 26 von dem Kassettenwulst 24 durch Auflaufen auf den Steuerkeil 25 quer zur Einschubrichtung der Kassette in die entgegengesetzte Endposition verschoben. Dadurch wird der am Schiebeelement 26 angeordnete Steg 18 jeweils unter die für diese Lage der Magnetbandkassette passenden Kipphebel 10a verschoben. Durch das Auflaufen der Kipphebel auf diese Stege 18 werden diese aufgerichtet und in die offenen Spulennaben 9 eingerastet.

Beim Einschieben einer Magnetbandkassette 3a mit geschlossenen Spulennaben und ohne den Wulst 24 gemäß Figur 4 erfolgt keine Verschiebung des Schiebeelementes 26 aus der in Figur 3 zentrierten Mittelposition. Beim Einschieben des Schiebers 13 mit der Magnetbandkassette 3a läuft der Steg 18 durch den zwischen den beiden Kipphebeln 10a, 10b gebildeten Freiraum 33 hindurch, ohne einen der Kipphebel aufzurichten. Damit können in den Aufnahmeraum 2 des Behälters 1 sowohl Magnetbandkassetten 3 mit offenen Spulennaben unabhängig von ihrer Lage als auch Magnetbandkassetten 3a mit geschlossenen Spulennaben eingeschoben werden. Bei einer Ausführungsform ohne Verschlußkappe ist es zweckmäßig, die Kassette mit einem Klemmelement 34 zu halten. In Figur 4 ist zur Zentrierung der Mittelposition des Schiebeelementes 26 eine Ausführungsform der Zentrierelemente dargestellt, die durch an der Bodenplatte 5 angeordnete und auf die Außenfläche der Steuerkeile 25 drückende Federelemente 35 gebildet sind.

## Patentansprüche

1. Behälter mit mehreren durch Bodenplatten (5) voneinander getrennten Aufnahmeräumen (2) für den Längseinschub von Magnetbandkassetten (3), wobei auf der Bodenplatte (5) ein verriegelbarer und mittels eines Federelements (17) mit der aufgelegten Magnetkassette (3) in eine Entnahmeposition ausfahrbarer Schieber (13) gelagert ist, an dem in die Spulennaben (9) der Magnetbandkassetten (3) eingreifende und Einschubrichtung fluchtende Arretiereinrichtungen angeordnet sind, wobei die Arretiereinrichtungen durch jeweils zwei nebeneinander angeordnete und unabhängig voneinander schwenkbare Kipphebel (10a,10b) gebildet sind, in der Bodenplatte (5) ein mit der Magnetbandkassette (3) quer zur Einschubrichtung verschiebbares Schiebeelement (26) mit Steuerkeilen (25) gelagert ist, an den jeweils ein Steg (18) für jede Arretiereinrichtung zum Einrasten eines der beiden Kipphebel (10a,10b) einer Arretiereinrichtung angeordnet ist das Schiebeelement (26) beim Ausfahren des Schiebers (13) durch Zentrierelemente (32, 35) in eine Mittelposition verschoben wird, und beim Einschieben des Schiebers (13) beim Verbleiben des Schiebeelementes (26) in der Mittelposition der Steg (18) in einen zwischen den beiden Kipphebeln (10a, 10b) gebildeten Freiraum (33) einschiebbar ist.

2. Behälter nach Anspruch 1, wobei die Zentrierelemente im Abstand der Steuerkeile am Schieber angeordnete Schrägflächen (32) sind, die in der Endposition des ausgefahrenen Schiebers (13) auf die Steuerkeile (25) des Schiebeelementes (26) auftreffen.

3. Behälter nach Anspruch 1, wobei die Zentrierelemente an der Bodenplatte (5) im Bereich der Aussparung für die Steuerkeile (25) angeordnete Federelemente (35) sind, die zentrierend auf den beiden Steuerkeilen (25) angreifen.

## Claims

1. A container having several receiving compartments (2), separated from one another by base plates (5), for longitudinal insertion of magnetic tape cassettes (3), a lockable slider member (13) being mounted on the base plate (5) and being arranged to be ejected, with the magnetic cassette (3) thereon, into a removal position means of a spring element (17), on which slider member there are arranged locking devices aligned in the insertion direction and engaging the reel hubs (9) of the magnetic tape cassettes (3), wherein each of the locking devices is formed by two adjacent rocker arms (10a, 10b) pivotable independently of one another, in the base plate (5) there is arranged a sliding element (26) with wedge-like control members (25) which is displaceable by the magnetic tape cassette (3) transversely to the insertion direction, on which sliding element there is a respective projecting ridge (18) for each locking device for locking into one of the two rocker arms (10a, 10b) of a locking device, on ejection of the slider member (13) the sliding element (26) is displaced by centring elements (32, 25) into a middle position, and on insertion of the slider member (13), with the sliding element (26) remaining in the middle position, the projecting ridge (18) is insertable into a free space (33) formed between the two rocker arms (10a, 10b).

2. A container according to claim 1, wherein the centring elements are sloping faces (32) arranged at a distance from the wedge-like control members on the slider member, which in the end position of the ejected slider member (13) come into contact with the wedge-like control members (25) of the sliding element (26).

3. A container according to claim 1, wherein the centring elements are spring elements (35) arranged on the base plate (5) in the region of the recess for the wedge-like control members (25), which spring elements engage the two wedge-like control members (25) so as to centre them.

## Revendications

1. Boîtier comportant plusieurs logements (2) séparés les uns des autres par des plaques de fond (5)et destinés à l'enfilage, dans le sens longitudinal, de cassettes (3) de bandes magnétiques, un tiroir (13), susceptible d'être verrouillé et d'être sorti en position de prélèvement, étant monté sur la plaque de fond (5), tiroir sur lequel sont mis en place des dispositifs de maintien en place qui pénètrent dans les moyeux (9) de bobines des cassettes (3) de bandes magnétiques et qui sont en alignement dans la direction d'enfilage, les dispositifs de maintien en place étant constitués de deux leviers basculants (10a, 10b) disposés l'un à côté de l'autre et susceptibles de pivoter indépendamment l'un de l'autre, un élément coulissant (26) comportant des coins de commande (25) étant monté dans la plaque (5) de fond en étant susceptible d'être déplacé avec la cassette (3) de bande magnétique transversalement à la direction d'enfilage, coins de commande (25) sur chacun desquels est disposée une barrette (18) destinée à chaque dispositif de maintien en place en vue de l'encliquetage de l'un des deux leviers basculants (10a, 10b) d'un dispositif de maintien en place, l'élément coulissant (26) étant déplacé jusque dans une position médiane par des éléments de centrage (32, 35) lors de la sortie du tiroir (13), et la barrette pouvant être introduite, lors de l'entrée du tiroir (13), dans l'espace libre (33) formé entre les deux leviers basculants, l'élément coulissant (26) restant dans la position médiane.

2. Boîtier selon la revendication 1, les éléments de centrage étant des surfaces obliques (32) disposées sur le tiroir à l'écart des coins de commande, surfaces obliques qui rencontrent les coins de commande (25) de l'élément coulissant (26) lorsque le tiroir (13) sorti est en position extrême.

3. Boîtier selon la revendication 1, les éléments de centrage étant des éléments à ressort (35) disposés sur la plaque de fond (5) dans la zone de l'échancrure destinée aux coins de commande (25), éléments à ressort qui attaquent, avec un effet de centrage, les deux coins de commande (25).
